# EUROPÄISCHE PATENTSCHRIFT

(11) **EP 3 084 253 B1**
(45) Veröffentlichungstag und Bekanntmachung des Hinweises auf die Patenterteilung: **10.01.2018**
(21) Anmeldenummer: 14821054.5
(22) Anmeldetag: 19.11.2014
(51) Int. Cl.: F16D 48/06

(54) **VERFAHREN ZUR ERHÖHUNG EINER VERFÜGBARKEIT EINER HYBRIDTRENNKUPPLUNG IN EINEM HYBRIDANTRIEBSSTRANG EINES KRAFTFAHRZEUGES**
METHOD FOR INCREASING THE AVAILABILITY OF A HYBRID SEPARATING CLUTCH IN A HYBRID DRIVE TRAIN OF A MOTOR VEHICLE
PROCÉDÉ DESTINÉ À AUGMENTER LA DISPONIBILITÉ D'UN EMBRAYAGE DE COUPURE HYBRIDE DANS LE GROUPE MOTOPROPULSEUR HYBRIDE D'UN VÉHICULE À MOTEUR

(30) Priorität: 17.12.2013 DE 102013226256
(43) Veröffentlichungstag der Anmeldung: 26.10.2016
(73) Patentinhaber: Schaeffler Technologies AG & Co. KG, 91074 Herzogenaurach (DE)
(72) Erfinder: HODRUS, Erhard, 76131 Karlsruhe (DE)
(86) Internationale Anmeldenummer: PCT/DE2014/200647
(87) Internationale Veröffentlichungsnummer: WO 2015/090307

(56) Entgegenhaltungen:
- EP-A2- 1 547 850
- DE-A1-102008 042 970
- DE-A1-102010 037 424
- DE-A1-102012 224 278

## Beschreibung

Die Erfindung betrifft ein Verfahren zur Erhöhung einer Verfügbarkeit einer Hybridtrennkupplung in einem Hybridantriebsstrang eines Kraftfahrzeuges, bei welchem die Hybridtrennkupplung zwischen einem Verbrennungsmotor und einem Elektrotraktionsantrieb angeordnet ist, gemäß dem Oberbegriff des Anspruchs 1.

Aus der EP 1 497 151 B1 ist ein Verfahren zum Betrieb eines Kraftfahrzeuges mit einem Antriebsmotor und einem Getriebe im Antriebsstrang bekannt. Zwischen dem Antriebsmotor und dem Getriebe ist dabei eine Trennkupplung angeordnet, welche von einem hydrostatischen Aktor betätigt wird. Der hydrostatische Aktor übernimmt dabei die Drehmomentübertragung auf die Trennkupplung. Die Ansteuerung des hydrostatischen Aktors erfolgt mittels einer Steuereinheit, die eine Steuer- und Leistungselektronik umfasst, welche den Antriebsmotor des Aktors, beispielsweise einen Elektromotor, ansteuert. Zur Ansteuerung der Trennkupplung ist das Steuergerät mit weiteren Sensoren verbunden, wobei darüber hinaus Signalverbindungen zu anderen Elektronikeinheiten, beispielsweise einem übergeordneten Steuergerät, wie der Motorelektronik, eines Antiblockiersystems oder einer Antischlupfregelung, vorgesehen sind.

Bei dem Einsatz einer solchen, von einem hydrostatischen Aktor betätigten Trennkupplung in einem Hybridantriebssystem ist diese zwischen einem Verbrennungsmotor und einem Elektrotraktionsantrieb angeordnet. Der Elektrotraktionsantrieb wird dabei dazu benutzt, um das Hybridfahrzeug in Bewegung zu setzen, ohne den Verbrennungsmotor zu verwenden. Mit einem Elektromotor des Elektrotraktionsantriebes kann bei Fahrten mit dem Verbrennungsmotor ein Drehmoment erhöht werden, indem der Elektromotor motorisch betrieben wird. Der Elektromotor kann aber auch verwendet werden, um im generatorischen Betrieb eine Batterie zu laden und den Verbrennungsmotor in einem Bereich mit höherem Wirkungsgrad zu betreiben.

Der hydrostatische Aktor ist für Drücke eines Hydraulikmediums bis etwa 25 bar selbsthaltend. Das bedeutet, dass elektrisch keine Energie aufgewendet werden muss, um das System an der aktuellen Position zu halten, da der Druck in diesem hydraulischen System üblicherweise unter dieser Schwelle liegt. Bei einem Ausfall des hydrostatischen Aktors verbleibt die Kupplung in ihrer bisherigen Position, so dass Situationen auftreten können, in welchen eine Weiterfahrt mit dem Hybridfahrzeug nicht mehr möglich ist.

Aus der DE 10 2010 037 424 A1 ist ein Verfahren gemäß dem Oberbegriff des Anspruchs 1 bekannt.

Bezüglich weiteren Standes der Technik wird auf die EP 1 547 850 A2 und die DE 10 2008 042 970 A1 verwiesen.

Der Erfindung liegt die Aufgabe zugrunde, ein Verfahren zur Erhöhung einer Verfügbarkeit der Hybridtrennkupplung bei Störungen des Kupplungsbetätigungssystems zu gewährleisten.

Diese Aufgabe wird mit den in Anspruch 1 angegebenen Maßnahmen gelöst.

Weitere vorteilhafte Ausgestaltungen der vorliegenden Erfindung sind Gegenstand der abhängigen Ansprüche.

Genauer gesagt wird die Hybridtrennkupplung über einen hydrostatischen Aktor angesteuert, wobei bei einer detektierten Störung des hydrostatischen Aktors zur Betätigung der im unbetätigten Zustand geschlossenen Hybridtrennkupplung der letzte, von einem Steuergerät erfasste Zustand des hydrostatischen Aktors zur Schätzung eines minimal übertragbaren Kupplungsmomentes verwendet wird. Mittels dieses minimal übertragbaren Kupplungsmomentes soll sichergestellt werden, dass das Hybridfahrzeug auch weiterhin im Fahrbetrieb gehalten wird.

Vorteilhafterweise besteht die detektierte Störung darin, dass der hydrostatische Aktor über eine Kommunikationsverbindung, mit welcher dieser mit dem Steuergerät verbunden ist, nicht antwortet, wobei aus einer aktuellen Geschwindigkeit des hydrostatischen Aktors und der Position der Hybridtrennkupplung zum Zeitpunkt des Ausfalls der Kommunikation das minimal übertragbare Moment der Hybridtrennkupplung bestimmt wird. Dabei wird davon ausgegangen, dass zwar die Kommunikationsverbindung zum hydrostatischen Aktor gestört, aber der hydrostatische Aktor selbst noch funktionsfähig ist, so dass die Hybridtrennkupplung auch weiterhin betätigt werden kann. Das minimal übertragbare Kupplungsmoment wird dabei so eingestellt, dass die Hybridtrennkupplung ein Kupplungsmoment überträgt und somit die Weiterfahrt des Hybridantriebes ermöglicht wird.

In einer Alternative besteht die detektierte Störung in einem Komponentenausfall des hydrostatischen Aktors, wobei in Abhängigkeit der ausgefallenen Komponente die Hybridtrennkupplung geschlossen wird, wobei vorzugsweise aus der aktuellen Geschwindigkeit des hydrostatischen Aktors und der Position der Hybridtrennkupplung zum Zeitpunkt des Komponentenausfalls das minimal übertragbare Kupplungsmoment der Hybridtrennkupplung bestimmt wird. Dabei wird differenziert, welcher Teil des hydrostatischen Aktors nicht mehr betriebsbereit ist, und in Abhängigkeit von dieser Differenzierung wird eine weitere Ansteuerung der Hybridtrennkupplung vorgenommen.

In einer Variante wird das minimale übertragbare Kupplungsmoment von einem Getriebesteuergerät, das mit dem hydrostatischen Aktor verbunden ist und welches die Störung detektiert, an ein übergeordnetes Steuergerät gemeinsam mit einem Statussignal für das minimale übertragbare Kupplungsmoment übertragen. Das übergeordnete Steuergerät, welches insbesondere auch den Verbrennungsmotor und den Elektromotor des Elektrotraktionsantriebes ansteuert, erhält somit die entsprechenden Informationen, um das Hybridfahrzeug weiter im Betrieb zu halten. Das Statussignal ermöglicht dem übergeordneten Steuergerät eine Einschätzung über die Zuverlässigkeit des vom Getriebesteuergerät vorgeschlagenen minimalen übertragbaren Kupplungsmomentes.

In einer Weiterbildung wird das Statussignal auf einen Wert "sicher" gesetzt, wenn das minimale übertragbare Kupplungsmoment einem maximalen Kupplungsmoment entspricht. Dies signalisiert dem übergeordneten Steuergerät, dass im Normalbetrieb weitergefahren werden kann.

In einer Alternative wird das Statussignal auf einen Wert "geschätzt" gesetzt, wenn das minimale übertragbare Kupplungsmoment kleiner als das maximale Kupplungsmoment ist. Diese Information bedeutet für das übergeordnete Steuersignal, dass mit einer besonderen Feinfühligkeit in der Ansteuerung des Hybridantriebes vorgegangen werden muss.

In einer Variante bestimmt bei einem Statussignal mit dem Wert "geschätzt" das übergeordnete Steuergerät durch eine Beobachtung eines Schlupfes in der Hybridtrennkupplung zwischen dem Verbrennungsmotor und dem Elektromotor des Elektrotraktionsantriebes bei Erhöhung, des Kupplungsmomentes das maximale Kupplungsmoment, um das Hybridfahrzeug weiter betreiben zu können.

Vorteilhafterweise arbeitet der Elektromotor des Elektrotraktionsantriebes während der Bestimmung des maximalen Kupplungsmomentes durch das übergeordnete Steuergerät in einem generatorischen Betriebsmodus. Dadurch wird sichergestellt, dass der Elektromotor Energie erzeugt, welche in einer Batterie gespeichert wird und im motorischen Betrieb des Elektromotors zu dessen Antrieb bereit steht.

In einer Ausführungsform begrenzt das übergeordnete Steuergerät ein Drehmoment des Verbrennungsmotors so, dass nicht zu viel Schlupf an der Hybridtrennkupplung entsteht. Damit wird sichergestellt, dass nur so viel Drehmoment übertragen wird, wie unbedingt notwendig ist, wobei das Fahrgefühl des Fahrers von dem Schlupf nicht beeinträchtigt wird.

In einer Variante wählt das übergeordnete Steuergerät eine Übersetzungsstufe in einem nachgeschalteten Getriebes so, dass eine Drehzahl des Verbrennungsmotors ein Laden einer Batterie des Elektromotors des Elektrotraktionsantriebes ermöglicht.

Die Erfindung lässt zahlreiche Ausführungsformen zu. Eine davon soll anhand der in der Zeichnung dargestellten Figuren näher erläutert werden.

Es zeigt:
- Fig. 1: Prinzipdarstellung einer Anordnung einer Hybridtrennkupplung in einem Hybridantrieb;
- Fig. 2: Fehlerbaum für mögliche Ausfälle eines hydrostatischen Aktors beim Betreiben der Hybridtrennkupplung;
- Fig. 3: eine Prinzipdarstellung für das erfindungsgemäße Verfahren.

Gleiche Merkmale sind mit gleichen Bezugszeichen gekennzeichnet.

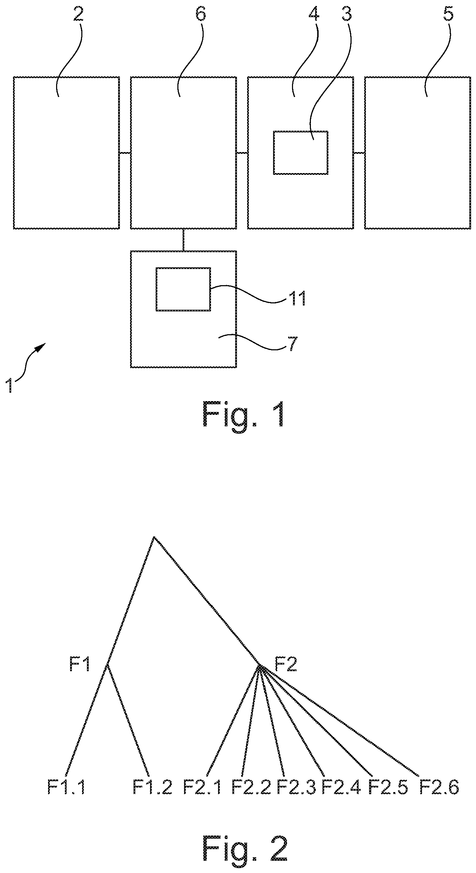

In Fig. 1 ist eine Prinzipdarstellung eines Hybridantriebes 1 dargestellt, wie dieser in Hybridfahrzeugen Anwendung findet. Der Hybridantrieb 1 umfasst dabei einen Verbrennungsmotor 2 und einen Elektromotor 3, welcher in einem Elektrotraktionsantrieb 4 angeordnet ist. Der Elektrotraktionsantrieb 4 ist mit einem Getriebe 5 verbunden. Zwischen dem Elektromotor 3 des Elektrotraktionsantriebes 4 und dem Verbrennungsmotor 2 ist eine Hybridtrennkupplung 6 angeordnet, welche von einem hydrostatischen Aktor 7 betätigt wird. Ein solcher hydrostatischer Aktor 7 umfasst dabei ein Kupplungssteuergerät 8, welches mit einem Getriebesteuergerät 9 über eine Kommunikationsleitung 12 in Verbindung steht, und einen Elektromotor 11, welcher zur Ansteuerung der Hybridtrennkupplung 6 infolge von Signalen des Kupplungssteuergerätes 8 aktiviert wird. Hinsichtlich des konkreten Aufbaus und der Funktionsweise des hydrostatischen Aktors 7 wird auf die EP 1 497 151 B1 Bezug genommen.

Ein solcher hydrostatischer Aktor 7 kann aufgrund verschiedener Ursachen ausfallen. Mögliche Fehler, die zum Ausfall des hydrostatischen Aktors 7 führen können, sind in dem Fehlerbaum gemäß Fig. 2 dargestellt. Dabei werden zwei Gruppen von Fehlern unterschieden. Die Fehlergruppe F1 betrifft Fehler durch eine fehlende Kommunikationsverbindung. Bei der fehlenden Kommunikationsverbindung antwortet der hydrostatische Aktor 7 aus Sicht des Getriebesteuergerätes 9 nicht. In dieser Fehlergruppe F1 müssen drei unterschiedliche Fehler betrachtet werden. Der erste Fehler F1.1 kann darin bestehen, dass die als CAN-Verbindungsleitung ausgebildete Kommunikationsleitung 12, die zwischen dem Kupplungssteuergerät 8 des hydrostatischen Aktors 7 und dem Getriebesteuergerät 9 verläuft, unterbrochen ist. In diesem Fall wird davon ausgegangen, dass der hydrostatische Aktor 7 mechanisch und elektrisch noch einwandfrei funktioniert. Das Kupplungssteuergerät 8 des hydrostatischen Aktors 7 empfängt aber keine CAN-Signale vom Getriebesteuergerät 9 und leitet daraufhin eine Fehlerreaktion ein, indem es den hydrostatischen Aktor 7 komplett öffnet und damit die Hybridtrennkupplung 6 ganz schließt.

Ein zweiter Fehler F1.2 kann darin liegen, dass die Versorgungsspannung am hydrostatischen Aktor 7 nicht mehr anliegt. Ein dritter Fehler F1.3 dieser Gruppe F1 kann in einem Fehler in der Recheneinheit des Kupplungssteuergerätes 8 des hydrostatischen Aktors 6 liegen, so dass dieses sich abschaltet.

Die zweite Fehlergruppe F2 betrifft einen Komponentenausfall innerhalb des hydrostatischen Aktors 7. Dabei werden sechs Fehler unterschieden. Der erste Fehler F2.1 liegt darin, dass ein Drucksensor ausfällt. Die Software auf dem hydrostatischen Aktor 7 erkennt diesen Fehler und meldet ihn an das Getriebesteuergerät 9. Der hydrostatische Aktor 7 kann ohne Probleme ganz geöffnet werden und die Hybridtrennkupplung 6 somit ganz geschlossen werden. Beim zweiten Fehler F2.2 fällt der Absolutwegsensor aus. Auch hier erkennt die Software auf dem hydrostatischen Aktor 7 diesen Fehler und meldet ihn an das Getriebesteuergerät 9. Der hydrostatische Aktor 7 kann durch Auswertung von Hall-Signalen noch ganz geöffnet werden und die Hybridtrennkupplung 6 damit ganz geschlossen werden, weshalb der Fahrbetrieb weiter aufrechterhalten werden kann. Beim dritten Fehler F2.3 sind die Hall-Sensoren ausgefallen. Die Software auf dem hydrostatischen Aktor 7 erkennt diesen Fehler und meldet ihn an das Getriebesteuergerät 9. Ein normaler Motorbetrieb ist jedoch nicht mehr möglich. Das Öffnen der Hybridtrennkupplung 6 kann durch Ansteuerung des Elektromotors 11 des hydrostatischen Aktors 7 als Schrittmotor ohne direkte Messung erfolgen. Über den Absolutwegsensor kann geprüft werden, wo sich der Elektromotor 11 des hydrostatischen Aktors 7 gerade befindet und ob ein Öffnen der Hybridtrennkupplung 6 erfolgreich war. Ein weiterer Fehler F2.4 kann darin bestehen, dass ein oder mehrere Wicklungen des Elektromotors 11 des hydrostatischen Aktors 7 unterbrochen sind, so dass sich der Elektromotor 11 des hydrostatischen Aktors 7 nicht mehr bewegen kann. Die aktuelle Position der Hybridtrennkupplung 6 kann über den Absolutwegsensor erfasst werden und an das Getriebesteuergerät 9 gemeldet werden. Gemäß einem Fehler F2.5 ist der hydrostatische Aktor 7 mechanisch nicht mehr bewegbar, was ebenfalls über den Absolutwegsensor erfasst werden kann und an das Getriebesteuergerät 9 gemeldet wird. Im Fehler F2.6 sind die Temperatursensoren ausgefallen. Hier kann nur noch ein letztes Schließen der Hybridtrennkupplung 6 durch Öffnen des hydrostatischen Aktors 6 veranlasst werden.

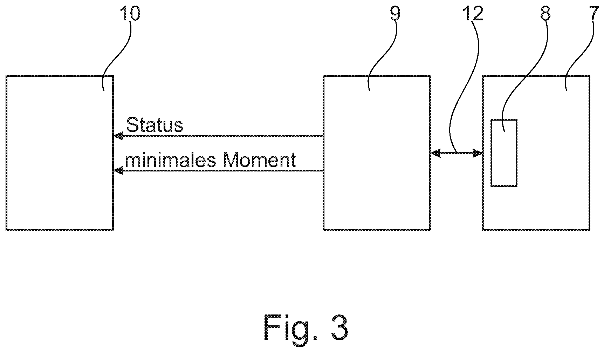

Wie bereits beschrieben, können in den einzelnen Fehlerfällen der Gruppe F2 mit hoher Sicherheit von dem Getriebesteuergerät 9 an ein übergeordnetes Steuergerä10 gemeldet werden, ob oder wie weit die Hybridtrennkupplung 6 geschlossen ist. Die Verbindung des übergeordneten Steuergerätes 10 ist in Fig. 3 dargestellt, wo das Kupplungssteuergerät 8 des hydrostatischen Aktors 7 über das Getriebesteuergerät 9 mit dem übergeordneten Steuergerät 10 verbunden ist. Bei einer Feststellung eines Fehlers meldet das Getriebesteuergerät 9 ein minimales Kupplungsmoment an das übergeordnete Steuergerät.

Für alle Fehler aus der Gruppe F1 resultiert, dass das übergeordnete Steuergerät 10 erkennt, dass der hydrostatische Aktor 7 nicht mehr antwortet. Aus der Geschwindigkeit des hydrostatischen Aktors 7 und der Position der Hybridtrennkupplung 6 zum Zeitpunkt des Ausfalls kann das Getriebesteuergerät 9 eine Abschätzung für das minimal übertragbare Kupplungsmoment vornehmen, was an zwei Beispielen erläutert werden soll.

Beispiel 1: Es wird davon ausgegangen, dass der hydrostatische Aktor 7 steht. Die Hybridtrennkupplung 6 hat zum letzten Zeitpunkt, bei welchem die Kommunikation noch funktioniert hat, beispielsweise ein Kupplungsmoment von 50 Nm übertragen. Zu diesem Zeitpunkt tritt einer der Fehler aus der Gruppe F1 auf. So kann dieses letzte Kupplungsmoment von 50 Nm als geschätztes übertragbares Kupplungsmoment vom Getriebesteuergerät 9 an das übergeordnete Steuergerät 10 gemeldet werden.

Beispiel 2: Öffnet sich der hydrostatische Aktor 7 zum Zeitpunkt des Ausfalls durch einen der in der Gruppe F1 beschriebenen Fehler und schließt damit die Hybridtrennkupplung 6 mit einem bestimmten Momentengradienten, so wird das Kupplungsmoment von dem zum Zeitpunkt des Ausfalls bereits erreichten Kupplungsmomentes, z.B. 50 Nm, noch erhöht. Das Kupplungsmoment von z.B. 80 Nm kann dann vom Getriebesteuergerät 9 als minimal übertragbares Kupplungsmoment an das übergeordnete Steuergerät 10 gemeldet werden. Das Gleiche gilt für das Schließen des hydrostatischen Aktors 7. Dort könnte dann z.B. ein Kupplungsmoment von 20 Nm an das übergeordnete Steuergerät 10 als minimal übertragbares Kupplungsmoment gemeldet werden.

Bei Fehlern, die im Zusammenhang mit der zweiten Gruppe F2 auftreten, reicht aber eine Abschätzung für das minimal übertragbare Kupplungsmoment nicht aus. In diesem Fall muss zusätzlich noch ein Status des Kupplungsmomentes mit den Werten "sicher" oder "geschätzt" gesetzt werden. Im Zusammenhang mit dem minimal übertragbaren Kupplungsmoment wird der Status dann vom Getriebesteuergerät 9 an das übergeordnete Steuergerät - 10 übermittelt.

Ist der Status "sicher", so entspricht das geschätzte minimal übertragbare Kupplungsmoment dem maximalen Kupplungsmoment, das die Hybridtrennkupplung 6 übertragen kann. Bei dem Status "geschätzt" liegt das minimale übertragbare Kupplungsmoment unter dem maximal übertragbaren Kupplungsmoment. In diesem Fall muss das übergeordnete Steuergerät 10 durch Beobachtung des Schlupfes der Hybridtrennkupplung 6 zwischen Verbrennungsmotor 2 und dem Elektromotor 3 des Elektrotraktionsantriebes 4 selbst durch Erhöhen des Drehmomentes am Verbrennungsmotor 2 herausfinden, wie hoch das maximal übertragbare Kupplungsmoment liegt. Der Elektromotor 3 kann dabei generatorisch betrieben werden. Steigt während des Erhöhens des Drehmomentes am Verbrennungsmotor 2 der Schlupf an der Hybridtrennkupplung 6 deutlich an und lässt sich nur durch Rücknahme des Drehmomentes des Verbrennungsmotors 2 wieder reduzieren, dann ist die Grenze für das maximale Kupplungsmoment gefunden.

Das übergeordnete Steuergerät 10 erfüllt während der Maßnahmen zur Erhöhung der Verfügbarkeit der Hybridtrennkupplung 6 folgende Aufgaben. Das Drehmoment des Verbrennungsmotors 2 ist durch das übergeordnete Steuergerät 10 geeignet zu begrenzen, damit nicht zu viel Schlupf an der Hybridtrennkupplung 6 entsteht. Da das übergeordnete Steuergerät 10 üblicherweise das zu übertragende Kupplungsmoment anfordert, muss durch die Schlupfüberwachung festgestellt werden, ob das Drehmoment des Verbrennungsmotors 2 nicht das wirklich erzielbare Kupplungsmoment übersteigt und die Hybridtrennkupplung 6 dadurch beschädigt werden könnte.

Als zweite Aufgabe muss das übergeordnete Steuergerät 10 die Übersetzungsstufe im nachgeschalteten Getriebe 5 so wählen, dass möglichst hohe Verbrennungsmotordrehzahlen erreicht werden, die ein Laden einer Batterie des Elektromotors 3 für den Antrieb begünstigen. Dies ist unabhängig davon, ob der Verbrennungsmotor 2 über den Elektromotor 3 oder einen zusätzlichen Startermotor gestartet wird.

Stellt sich beispielsweise heraus, dass das maximale Kupplungsmoment so klein ist, dass es für eine Anfahrt des Hybridfahrzeuges nicht ausreicht, aber für Fahrten mit gemäßigter Geschwindigkeit, dann muss der Elektromotor 3 des Elektrotraktionsantriebes 4 zusätzlich eingesetzt werden, um die Anfahrten zu ermöglichen. Um mehrere Anfahrten in Folge zu ermöglichen, muss dafür gesorgt werden, dass die Batterie des Elektromotors 3 geladen ist.

### Bezugszeichenliste

- 1: Hybridantrieb
- 2: Verbrennungsmotor
- 3: Elektromotor
- 4: Elektrotraktionsantrieb
- 5: Getriebe
- 6: Hybridtrennkupplung
- 7: Hydrostatischer Aktor
- 8: Kupplungssteuergerät
- 9: Getriebesteuergerät
- 10: Übergeordnetes Steuergerät
- 11: Elektromotor des hydrostatischen Aktors
- 12: Kommunikationsleitung

## Patentansprüche

1. Verfahren zum Erhöhen einer Verfügbarkeit einer Hybridtrennkupplung (6) in einem Hybridantriebsstrang eines Kraftfahrzeuges, bei welchem die Hybridtrennkupplung (6) zwischen einem Verbrennungsmotor (2) und einem Elektrotraktionsantrieb (4) angeordnet ist, wobei das Verfahren aufweist:
Ansteuern der Hybridtrennkupplung (6) über einen hydrostatischen Aktor (7) zum Betätigen der in einem unbetätigten Zustand geschlossenen Hybridtrennkupplung (6), und
Detektieren einer Störung des hydrostatischen Aktors (7),
**dadurch gekennzeichnet, dass**
bei einer detektierten Störung des hydrostatischen Aktors (7) ein letzter, von einem Steuergerät (9) erfasster Zustand des hydrostatischen Aktors (7) zum Schätzen eines minimal übertragbaren Kupplungsmoments verwendet wird.

2. Verfahren nach Anspruch 1, **dadurch gekennzeichnet, dass** die detektierte Störung darin besteht, dass der hydrostatische Aktor (7) über eine Kommunikationsverbindung (12), mit welcher dieser mit dem Steuergerät (9) verbunden ist, nicht antwortet, wobei aus einer aktuellen Geschwindigkeit des hydrostatischen Aktors (7) und einer Position der Hybridtrennkupplung (6) zu einem Zeitpunkt eines Ausfalls einer Kommunikation das minimal übertragbare Kupplungsmoment der Hybridtrennkupplung (6) bestimmt wird.

3. Verfahren nach Anspruch 1, **dadurch gekennzeichnet, dass** die detektierte Störung in einem Komponentenausfall des hydrostatischen Aktors (7) besteht, wobei in Abhängigkeit von einer ausgefallenen Komponente die Hybridtrennkupplung (6) geschlossen wird, indem aus einer aktuellen Geschwindigkeit des hydrostatischen Aktors (7) und einer Position der Hybridtrennkupplung (6) zu einem Zeitpunkt des Komponentenausfalls das minimal übertragbare Kupplungsmoment der Hybridtrennkupplung (6) bestimmt wird.

4. Verfahren nach einem der vorhergehenden Ansprüche, **dadurch gekennzeichnet, dass** das minimal übertragbare Kupplungsmoment von einem Getriebesteuergerät (9), das mit dem hydrostatischen Aktor (7) verbunden ist und welches die Störung detektiert, an ein übergeordnetes Steuergerät (10) gemeinsam mit einem Statussignal für das minimale übertragbare Kupplungsmoment übertragen wird.

5. Verfahren nach Anspruch 4, **dadurch gekennzeichnet, dass** das Statussignal auf einen Wert "sicher" gesetzt wird, wenn das minimale übertragbare Kupplungsmoment einem maximalen Kupplungsmoment entspricht.

6. Verfahren nach Anspruch 4, **dadurch gekennzeichnet, dass** das Statussignal auf einen Wert "geschätzt" gesetzt wird, wenn das minimale übertragbare Kupplungsmoment kleiner als das maximale Kupplungsmoment ist.

7. Verfahren nach Anspruch 6, **dadurch gekennzeichnet, dass** bei einem Statussignal mit dem Wert "geschätzt" das übergeordnete Steuergerät (10) durch Beobachten eines Schlupfes zwischen dem Verbrennungsmotor (2) und einem Elektromotor (3) des Elektrotraktionsantriebs (4) bei Erhöhen des Kupplungsmoments das maximale Kupplungsmoment bestimmt.

8. Verfahren nach Anspruch 7, **dadurch gekennzeichnet, dass** der Elektromotor (3) des Elektrotraktionsantriebs (4) während des Bestimmens des maximalen Kupplungsmoments in einem generatorischen Betriebsmodus arbeitet.

9. Verfahren nach einem der Ansprüche 4 bis 8, **dadurch gekennzeichnet, dass** das übergeordnete Steuergerät (10) ein Drehmoment des Verbrennungsmotors (1) so begrenzt, dass nur ein geringer Schlupf an der Hybridtrennkupplung (6) entsteht.

10. Verfahren nach einem der Ansprüche 4 bis 9, **dadurch gekennzeichnet, dass** das übergeordnete Steuergerät (10) eine Übersetzungsstufe in einem nachgeschalteten Getriebe (5) so wählt, dass eine Drehzahl des Verbrennungsmotors (2) ein Laden einer Batterie des Elektromotors (3) des Elektrotraktionsantriebs (4) ermöglicht.

## Claims

1. Method for increasing the availability of a hybrid clutch (6) in a hybrid drive train of a motor vehicle, in which the hybrid clutch (6) is arranged between an internal combustion engine (2) and an electric traction drive (4), wherein the method comprises:
actuating the hybrid clutch (6) via a hydrostatic actuator (7) in order to activate the hybrid clutch (6) which is closed in an unactivated state, and
detecting a fault in the hydrostatic actuator (7), **characterized in that**
in the case of a detected fault in the hydrostatic actuator (7) a last state of the hydrostatic actuator (7) which was detected by a control device (9) is used to estimate a minimum transmissible clutch torque.

2. Method according to Claim 1, **characterized in that** the detected fault consists in the fact that the hydrostatic actuator (7) does not respond via a communication connection (12) by means of which it is connected to the control device (9), wherein the minimum transmissible clutch torque of the hybrid clutch (6) is determined from a current speed of the hydrostatic actuator (7) and a position of the hybrid clutch (6) at a time of failure of communication.

3. Method according to Claim 1, **characterized in that** the detected fault consists in a component failure of the hydrostatic actuator (7), wherein the hybrid clutch (6) is closed as a function of a failed component **in that** the minimum transmissible clutch torque of the hybrid clutch (6) is determined from a current speed of the hydrostatic actuator (7) and a position of the hybrid clutch (6) at a time of the component failure.

4. Method according to one of the preceding claims, **characterized in that** the minimum transmissible clutch torque is transmitted by a gearbox control device (9), which is connected to the hydrostatic actuator (7) and which detects the fault, to a superordinate control device (10), together with a status signal for the minimum transmissible clutch torque.

5. Method according to Claim 4, **characterized in that** the status signal is set to a value of "safe" if the minimum transmissible clutch torque corresponds to a maximum clutch torque.

6. Method according to Claim 4, **characterized in that** the status signal is set to a value of "estimated" if the minimum transmissible clutch torque is smaller than maximum clutch torque.

7. Method according to Claim 6, **characterized in that** in the case of a status signal with the value of "estimated", the superordinate control device (10) determines the maximum clutch torque by observing a slip between the internal combustion engine (2) and an electric motor (3) of the electric traction drive (4) when the clutch torque is increasing.

8. Method according to Claim 7, **characterized in that** the electric motor (3) of the electric traction drive (4) operates in a generator operating mode during the determination of the maximum clutch torque.

9. Method according to one of Claims 4 to 8, **characterized in that** the superordinate control device (10) limits a torque of the internal combustion engine (1) in such a way that only a small slip is produced at the hybrid clutch (6).

10. Method according to one of Claims 4 to 9, **characterized in that** the superordinate control device (10) selects a transmission ratio in a downstream gearbox (5) in such a way that a rotational speed of the internal combustion engine (2) permits a battery of the electric motor (3) of the electric traction drive (4) to be charged.

## Revendications

1. Procédé d'augmentation de la disponibilité d'un embrayage de séparation hybride (6) d'un train d'entraînement hybride d'un véhicule automobile, dans lequel l'embrayage de séparation hybride (6) est disposé entre un moteur à combustion interne (2) et un entraînement électrique en traction (4), le procédé présentant les étapes suivantes :
commande de l'embrayage de séparation hybride (6) par un actionneur hydrostatique (7) qui actionne l'embrayage de séparation hybride (6) fermé dans un état non actionné et
détection d'une perturbation de l'actionneur hydrostatique (7),
**caractérisé en ce que**
au cas où une perturbation de l'actionneur hydrostatique (7) est détectée, le dernier état de l'actionneur hydrostatique (7) saisi par un appareil de commande (9) est utilisé pour évaluer le couple d'embrayage minimum pouvant être transmis.

2. Procédé selon la revendication 1, **caractérisé en ce que** la perturbation détectée consiste **en ce que** l'actionneur hydrostatique (7) ne répond pas sur une liaison de communication (12) par laquelle il est relié à l'appareil de commande (9), le couple d'embrayage minimum transmissible de l'embrayage de séparation hybride (6) étant déterminé à partir de la vitesse en cours de l'actionneur hydrostatique (7) et de la position de l'embrayage de séparation hybride (6) au moment d'une défaillance d'une communication.

3. Procédé selon la revendication 1, **caractérisé en ce que** la perturbation détectée consiste en une défaillance d'un composant de l'actionneur hydrostatique (7), l'embrayage de séparation hybride (6) étant fermé en fonction du composant défaillant en déterminant le couple d'embrayage minimum transmissible de l'embrayage de séparation hybride (6) à partir de la vitesse en cours de l'actionneur hydrostatique (7) et de la position de l'embrayage de séparation hybride (6) à l'instant de la défaillance du composant.

4. Procédé selon l'une des revendications précédentes, **caractérisé en ce que** le couple d'embrayage minimum transmissible est transmis par un appareil (9) de commande de transmission raccordé à l'actionneur hydrostatique (7) et détectant la perturbation à un appareil de commande (10) d'ordre plus élevé, en même temps qu'un signal de statut du couple d'embrayage minimum transmissible.

5. Procédé selon la revendication 4, **caractérisé en ce que** le signal de statut est placé à la valeur "sûr" si le couple d'embrayage minimum transmissible correspond à un couple d'embrayage maximum.

6. Procédé selon la revendication 4, **caractérisé en ce que** le signal de statut est placé à la valeur "estimé" si le couple d'embrayage minimum transmissible est inférieur au couple d'embrayage maximum.

7. Procédé selon la revendication 6, **caractérisé en ce que** si le signal de statut présente la valeur "estimé", l'appareil de commande (10) d'embrayage d'ordre plus élevé détermine le couple maximum d'embrayage par observation du glissement entre le moteur à combustion interne (2) et un moteur électrique (3) de l'entraînement électrique en traction (4) en augmentant le couple d'embrayage.

8. Procédé selon la revendication 7, **caractérisé en ce que** le moteur électrique (3) de l'entraînement électrique en traction (4) travaille en mode génératrice pendant la détermination du couple d'embrayage maximum.

9. Procédé selon l'une des revendications 4 à 8, **caractérisé en ce que** l'appareil de commande (10) d'embrayage d'ordre plus élevé limite le couple de rotation du moteur à combustion interne (1) de telle sorte que seul un léger patinage s'établisse sur l'embrayage de séparation hybride (6).

10. Procédé selon l'une des revendications 4 à 9, **caractérisé en ce que** l'appareil de commande (10) d'ordre hiérarchique plus élevé sélectionne un étage de transmission de la transmission (5) branchée en aval de telle sorte que la vitesse de rotation du moteur à combustion interne (2) permette de charger la batterie du moteur électrique (3) de l'entraînement en traction électrique (4).
